# EUROPEAN PATENT APPLICATION

(11) **EP 1 684 473 A1**
(43) Date of publication of application: **26.07.2006**
(21) Application number: 05425022.0
(22) Date of filing: 21.01.2005
(51) Int. Cl.: H04L 12/56

(54) **Method of management of multiple uplink tbfs in gprs systems**

(71) Applicant: Siemens S.p.A., 20126 Milano (IT)
(72) Inventor: Masseroni, Carlo, 20017 Rho (MI) (IT); Parolari, Sergio, 20133 Milano (IT); Trivisonno, Riccardo, 20146 Milano (IT)

(57) **Abstract**

A method of managing multiple uplink temporary block flows (TBFs) in GPRS is disclosed, in which a mobile station receiving an uplink state flag (USF) for a specific TBF and a specific time slot, is enabled to transmit RLC/MAC radio blocks relevant either to the signalled TBF or to any other TBF using the same time slot, and the base station is enabled to accept data from a mobile station provided they belong to a logical link allocated on the time slot concerned by the USF.

## Description

### Field of the invention

The present invention refers to packet services in mobile communication systems, and more particularly it concerns a method of managing radio resources for uplink communications when a mobile station can concurrently activate several packet flow contexts (PFCs), that is, when the mobile station is simultaneously running several applications.

More particularly, the invention can find application in GPRS (General Packet Radio Service) in A/Gb mode, i.e. in the mode of operation of a mobile station when connected to the Core Network via GERAN (GSM EDGE Radio Access Network) and the A and/or Gb interfaces.

### Background of the Invention

GPRS is a packet communication system developed as an evolution of GSM and it is now being offered to users of 3rd generation systems.

As known, and as disclosed in particular in 3GPP TS (3rd Generation Partnership Project Technical Specification) 44.060, the data packet transfer on the physical data channels requires setting up logical unidirectional connections known as Temporary Block Flows (TBFs) between MAC (Medium Access Control) protocol layers of the Mobile Station (MS) and the Base Station System (BSS).

A TBF is intended to support the unidirectional transfer of LLC (Logical Link Control) PDU (Protocol Data Units) on the packet data channels (PDCHs). Uplink and downlink TBFs are respectively required to transfer data from MS to BSS and from BSS to MS, and a TBF may involve one or more PDCHs (or time slots). A time slot can in turn accommodate one or more TBFs (TBF Multiplexing) belonging to different mobile stations. A TBF can also be seen as the whole of the physical resources required for the data transfer:

Each TBF is assigned a Temporary Flow Identity (TFI) by the network. The mobile station shall assume that the TFI value is unique among concurrent TBFs in the same direction (uplink or downlink) on all allocated PDCHs or timeslots used for the TBF. The same TFI value may be used concurrently for TBFs on other PDCHs in the same direction and for TBFs in the opposite direction. An RLC/MAC block associated/transmitted with a certain TBF shall comprise a TFI.

When an uplink TBF is established, an Uplink State Flag (USF) is assigned for each PDCH allocated to the TBF. The USF is used by the network to control the multiplexing of different mobile stations and TBFs on an uplink PDCH. The USF field is sent in all downlink RLC/MAC blocks and indicates the owner of the next uplink radio block to be transmitted on the same timeslot (see 3GPP TS 45.002), i.e., the MS that is allowed to transmit the next uplink radio block on the same timeslot. The USF can thus be seen as a "token to speak" sent to the mobile station.

Until Release 5 of 3GPP specifications, an MS could support simultaneously only two TBFs, one per direction.

As packet data services become more and more widely used, mobile stations may need to support simultaneous multiple applications with different quality of service requirements. For instance, mobile users who have a real time audio, a web browser and an e-mail application running at the same time require support for all these applications with their appropriate QoS (Quality of Service).

It could be possible to support multiple applications by mapping all of them onto one TBF or by releasing a TBF and setting up a new one whenever data from a different application needs to be transmitted. Both of these approaches have some limitations:
- in order to multiplex several data streams onto one TBF, they must all share the same RLC mode (acknowledged/unacknowledged mode, i.e. operation with or without retransmission for error correction). If upper layer PDUs utilising a different RLC mode need to be transmitted, the current TBF has to be released and a new one has to be set-up, thus leading to delays and high signalling load. The delay could be incompatible with the requirements of real time applications, as will be better discussed below;
- even if the different data flows can utilise the same TBF, the smallest unit for multiplexing is the LLC (Logical Link Control) frame. The payload of an LLC frame may be up to 1520 octets. Therefore, it is not possible to multiplex an application with small packets and strict delay requirements together with an application with large packets when only one TBF is used.

An optimised concept to support service specific QoS in GERAN is to have a 1:1 mapping between a service (defining the QoS) and TBFs (fulfilling the QoS): in case of several active services (and therefore active PFCs), several TBFs are established in each direction at the same time for the same MS. This feature is called "Multiple TBF" (mTBF) and has been admitted from Release 6 of the 3GPP specifications.

The mTBF introduction has caused changes in RLC/MAC procedures, and new messages and information elements have been defined (see 3GPP TS 44.060 v. 6.8.0) to handle the request, the assignment and the reconfiguration of multiple TBFs.

In particular, the network can assign different parameters (timeslots, USFs) for each TBF, even if uplink multiple TBFs assigned to a mobile station shall not have common USF values on the same radio resource (i.e. on the same PDCH). That is, TBFs are univocally addressed by a USF per each PDCH belonging to TBF allocation.

According to the present 3GPP specifications, when the network sends a "token to speak" (i.e. an assigned USF) on a given PDCH for a TBF (service/application), the MS must send data only for that TBF. Whenever, and for any reason, the MS receiving the USF has no data to be sent, a dummy RLC/MAC Block shall be sent. If the MS sends a data block corresponding to an unexpected TFI, the base station system discards that data block.

This uplink multiple TBF management procedure is scarcely flexible, and may lead to a scarcely efficient exploitation of the bandwidth allocated to the MS or to difficulties in attaining a requested QoS, especially for real time services.

Thus, it is an object of the present invention to provide an improved and more efficient method of uplink multiple TBF management.

### Summary of the Invention

To achieve that object, there is provided a method of managing multiple, simultaneously active packet flows from a mobile station to a base station in a mobile communication system, wherein each packet flow has assigned thereto a unidirectional logical link, in particular a temporary block flow in a GPRS system, between the mobile station and the base station and vice versa, and each logical link is supported by one or more radio channels, and wherein a mobile station is allowed to transmit data packets on one of said radio channels towards the base station upon reception from the latter of a data request identifying one of the logical links active for that station on said radio channel. According to the invention, said data request enables the mobile station to transmit data packets relevant to either the logical link identified in the request, or to any of the active logical links using said radio channel, and the base station is enabled to accept data packets from a mobile station provided they belong to a logical link active on the radio channel concerned by the data request.

Preferably, the mobile station sends data relevant to a logical link signalled by the request, if such data are available, and sends data of another logical link, if data relevant to the logical link signalled by the request are not available.

The invention also concerns a mobile station and a base station implementing the method.

The invention is particularly useful when an MS is simultaneously performing multiple real time services (e.g. streaming services / VoIP), for which "always on" TBFs are set up (i. e. TBFs that are kept active for a whole session, with a guaranteed peak or mean throughput application bandwidth depending on the transfer delay constraints) and non real time services (e.g. web browser and an e-mail application). This is the typical situation for multiple TBF use.

When using the present invention, such an MS running several RT applications is allowed to give the unused bandwidth for an uplink RT TBF to other TBFs. A more efficient use of radio resource is thus achieved. For example, if RT TBF is carrying a voice application (i.e. VoIP), where typically the source activity is equal to 50% of session duration, 50% of reserved bandwidth for RT TBF will not be wasted, but it will be used for the other TBFs.

Moreover, the possibility of transferring the received "token to speak" to another TBF allows satisfying a QoS parameter. For example, if a RT TBF needs extra-bandwidth, e. g. because radio conditions are worsening, extra-bandwidth can be taken from resources originally allocated to another application. The invention can be used to implement QoS Support Algorithms in the MS.

### Brief description of the drawings

Further objects, characteristics and advantages of the invention will become apparent from the following description of a preferred embodiment, given by way of non-limiting example and illustrated in the accompanying drawings, in which:
- Fig. 1 schematically shows the structure of a GPRS system;
- Fig. 2 shows the GPRS protocol stack;
- Fig. 3 is a graphical representation of the parameters of two TBFs;
- Figs. 4A and 4B are flow charts of the operations at the mobile station side according to two embodiments of the invention;
- Fig. 5 is a flow chart of the operations of the invention at the base station side; and
- Figs. 6A to 6C are pictorial representations of the operations according to the invention.

### Description of the preferred embodiments

For a better understanding of the invention, the structure of a mobile network MN1 supporting the GPRS service and the GPRS protocol stack will be shortly recalled.

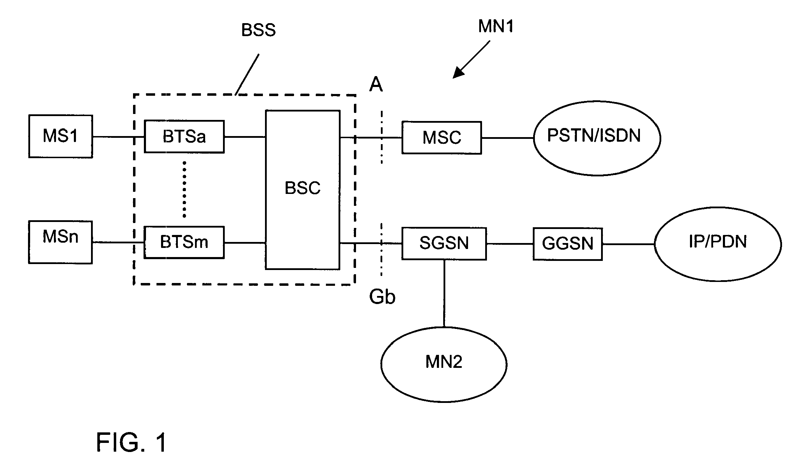

Referring to Fig. 1, reference symbols MS1...MSn denote a plurality of mobile stations capable of transmitting/receiving data packets (e.g. supplied by or directed to any suitable data terminal such as a notebook or the like, not shown), and symbols BTSa...BTSm are the radio transceiver stations of a plurality of cells, which are assumed to be controlled by a same base station controller BSC, including a packet control unit (not shown) intended to manage packet traffic.

Transceiver stations BTSa...BTSm and controller BSC form the so-called base station system BSS.

Base station system BSS is connected on the one hand (A interface) to mobile switching centre MSC, which is the unit managing circuit switched communications and allowing connection of mobile network MN1 to the Public Switched Telephone Network PSTN or to the Integrated Services Digital Network ISDN. Base station system BSS is further connected, on the other hand (Gb interface), to the so-called Service GPRS Support Node (SGSN), which performs, for packet-switched communications, the same functions as those performed by MSC for the circuit-switched communications. SGSN connects network MN1 to other mobile networks, like network MN2, and allows the access to an external packet data network based on Internet protocol (IP) or on other packet-based protocols. Connection with external data network takes place through the so-called Gateway GPRS Support Node (GGSN).

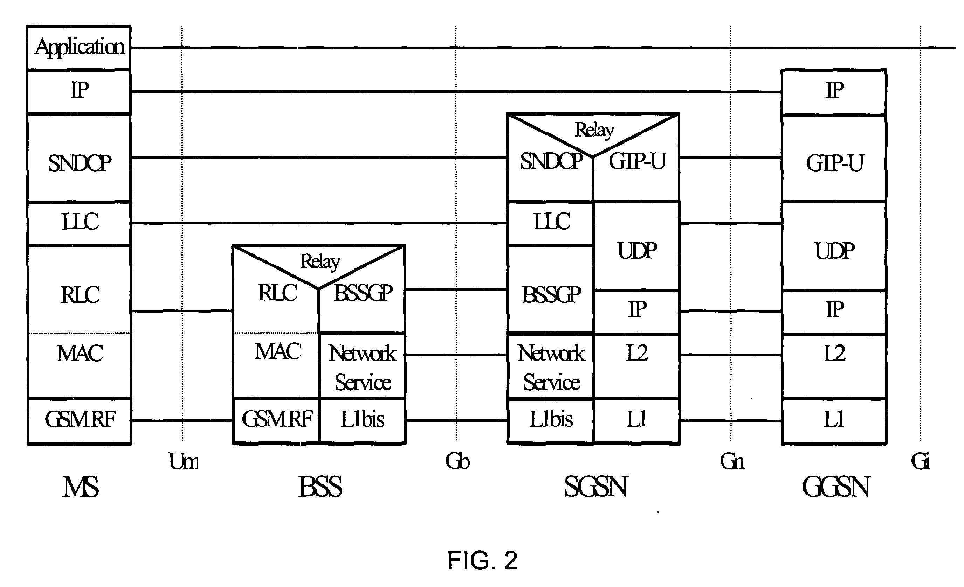

Figure 2 gives a general overview of the user plane for the above network. The user plane consists of a layered protocol structure providing user information transfer, along with associated information transfer control procedures (e.g. flow control, error detection, error correction and error recovery). The user plane independence of the Network Subsystem (NSS) platform from the underlying radio interface is preserved via the Gb interface. The drawing also shows, besides interface Gb already indicated in Fig. 1, interface Um between the mobile station MS and BSS and interface Gn between SGSN and GGSN, and reference point Gi between the GPRS system and a packet data network.

The tasks of the different protocol layers/sublayers are well known to the skilled in the art, and need not to be disclosed in detail. A short definition is however given below, along with an indication of the standards/specifications defining them. The 3GPP specifications are available at the 3GGP Site www.3gpp.org, the GSM specifications are available at the ETSI (European Telecommunications Standard Institute) site www.etsi.org, and the RFC specifications are available at the IETF (Internet Engineering Task Force) site www.ietf.org.
- GTP-U (GPRS Tunnelling Protocol for the user plane): This protocol tunnels user data between GPRS Support Nodes in the backbone network. The GPRS Tunnelling Protocol shall encapsulate all PDP (Packet Data Protocol) PDUs. GTP is specified in 3GPP TS 29.060.
- UDP (User Datagram Protocol) carries GTP PDUs for protocols that do not need a reliable data link (e.g. IP), and provides protection against corrupted GTP PDUs. UDP is defined in RFC 768.
- IP: This is the backbone network protocol used for routing user data and control signalling. The backbone network may initially be based on the IPv4 (IP version 4). Ultimately, IPv6 (IP Version 6) shall be used. When IPv6 is used in the backbone, then IPv4 shall also be supported. IPv4 is defined in RFC 791 and IPv6 is defined in RFC 2460.
- SNDCP (Subnetwork Dependent Convergence Protocol): This transmission functionality maps network-level characteristics onto the characteristics of the underlying network. SNDCP is specified in GSM Specification 04.65.
- LLC (Logical Link Control): This layer provides a highly reliable ciphered logical link. LLC shall be independent of the underlying radio interface protocols in order to allow introduction of alternative GPRS radio solutions with minimum changes to the NSS. LLC is specified in GSM Specification 04.64.
- Relay: In the BSS, this function relays LLC PDUs between the Um and Gb interfaces. In the SGSN, this function relays PDP PDUs between the Gb and Gn interfaces.
- BSSGP (Base Station System GPRS Protocol): This layer conveys routing- and QoS-related information between the BSS and the SGSN. BSSGP does not perform error correction. BSSGP is specified in GSM Specification 08.18.
- Network Service (NS): This layer transports BSSGP PDUs. NS is based on the Frame Relay connection between the BSS and the SGSN, and may multi-hop and traverse a network of Frame Relay switching nodes. NS is specified in GSM Specification 08.16.
- RLC/MAC: This layer contains two functions: The Radio Link Control function provides a radio-solution-dependent reliable link. The Medium Access Control function controls the access signalling (request and grant) procedures for the radio channel, and the mapping of LLC frames onto the GSM physical channel. RLC/MAC is defined in GSM 04.60 and in the above-mentioned 3GPP TS 44.060.
- GSM RF: is the physical layer on the radio interface, defined in GSM 05 series.

The invention is applied at the level of RLC/MAC layer.

As said before, the most recent versions of 3GPP specifications, from release 6 on, have admitted the possibility for a mobile station to support several TBFs for each direction over the GERAN.

The multiple TBF assignment message generated by the network (see 3GPP specification 44.060) defines the time slots assigned to the mobile station for its TBFs and can assign different timeslots and USFs to each TBF. In particular, the parameter assignment is such that uplink multiple TBFs assigned to a mobile station MS shall not have common USF values on the same radio resource (i.e. PDCH), even if a same USF can be used for all time slots or at least for consecutive time slots of the TBF. TBFs are univocally addressed by a USF per each PDCH (i.e. time slot) belonging to TBF allocation.

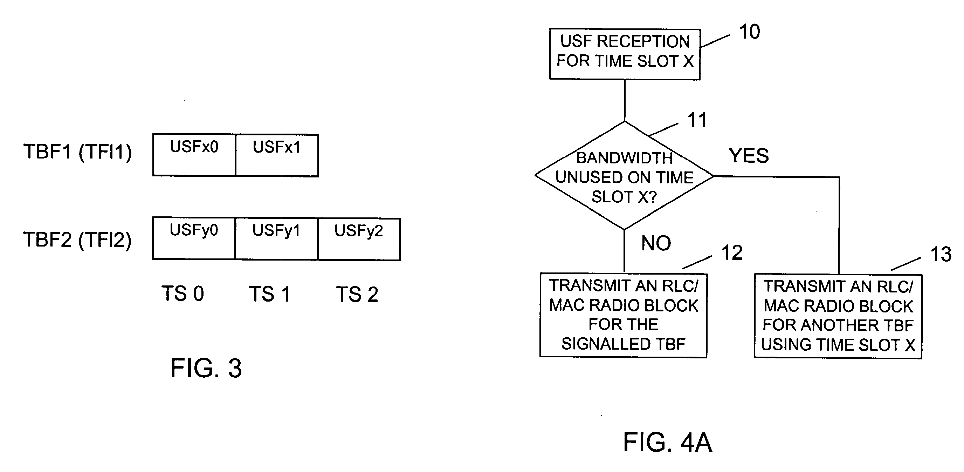

This situation is graphically shown in Fig. 3. Here two uplink TBFs, denoted by symbols TBF1 and TBF2, are shown, the first one using time slots TS0 and TS1 and the second one using time slots TS0, TS1, TS2. The time slots of TBF1 are assigned uplink state flags USFx0, USFx1 and the time slots of TBF2 are assigned uplink state flags USFy0, USFy1, USFy2. As said, the USFs of a TBF are possibly identical to each other but, in any case, USFx0, USFx1 must be different from USFy0, USFy1, respectively.

Conventionally, when the network transmits an USF, e.g. an USFy, only data belonging to TBF2 can be transmitted and, if no data is available, a dummy block is transmitted.

According to the invention, a more flexible management of the uplink TBFs is adopted.

More particularly, if MS receives an assigned USF or token-to-speak on a generic time slot TSk, then MS can send, in the next uplink radio block:
1) an RLC/MAC Data Block belonging to the TBF/TFI (service/application) corresponding to the signalled USF, or
2) an RLC/MAC Data Block belonging to any other TBF/TFI (service/application) allocated on the Task where USF is received.

The decision whether to adopt solution 1) or solution 2) could be based on the existence, in the MS buffers, of data to be sent for the TBF corresponding to the USF signalled by the network. For instance, solution 1) is adopted when data for that particular TBF exist, otherwise solution 2) is adopted. Thus, if data for the concerned TBF exist, the uplink TBF management according to the invention corresponds with the conventional management; if data for that TBF are not present, significant data (even if relating to a different TBF) are transmitted in place of a dummy radio block.

In general, it can be said that, if there is bandwidth unused for a TBF on the time slot concerned by the token, such bandwidth could be used for data of co-allocated TBFs.

This operation is illustrated in the flow chart of Fig. 4A.

Step 10 is the reception of an USF from BSS. Step 11 is the check for the existence of unused bandwidth for the TBF signalled by USF, and steps 12 and 13 are the transmission of RLC/MAC radio blocks for the signalled TBF or for another co-allocated TBF, depending on the negative or positive outcome of check 11.

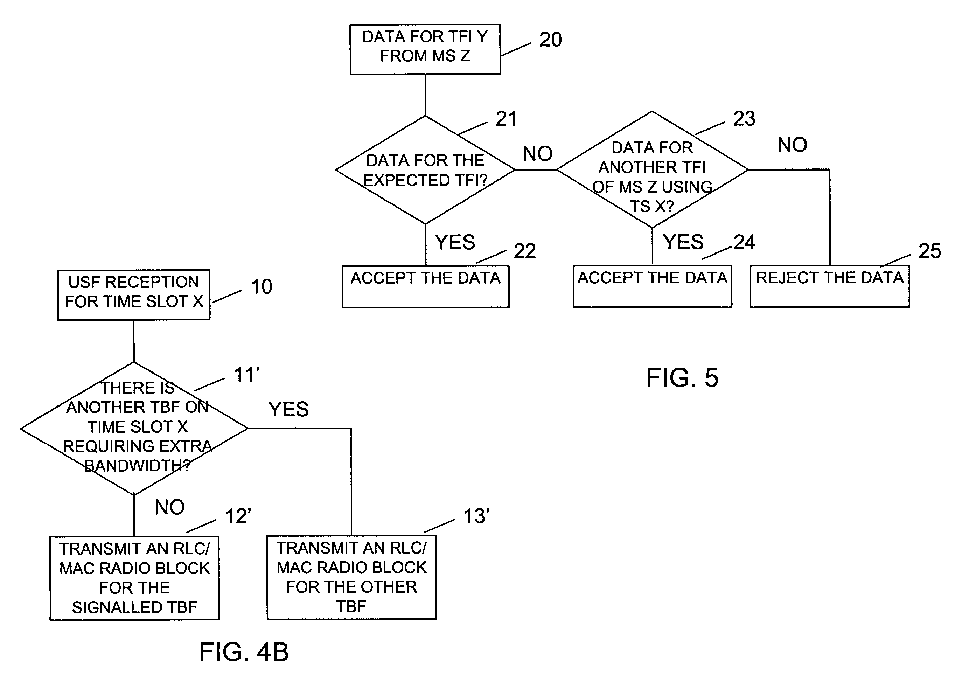

Another possibility is that MS transfers the token to speak from the signalled TBF to another one for which an extra bandwidth is becoming necessary, for instance because the radio conditions for said other TBF are worsening. This is shown in the flow chart of Fig. 4B, where the check on the existence of a TBF requiring extra bandwidth is denoted 11', and steps 12', 13' are the consequent transmissions of data related to the signalled TBF or to that requiring the extra bandwidth.

At the BSS side, If BSS receives an RLC/MAC data block containing a non-expected TFI, but the TFI corresponds to a TBF belonging to the same MS and co-allocated on TSx, then BSS will accept the RLC/MAC Data Block.

The operation of BSS is shown in the flow chart of Fig. 5. Step 20 is the reception at BSS of an RLC/MAC block with the associated TFI. Step 21 is the check on whether the TFI is the expected one or not. Step 22 is the acceptance of the data in case check 21 has a positive outcome. Step 23 is the further check on the allocation of a non-expected TFI, with consequent acceptance (step 24) or rejection (step 25) of the received data depending on whether the received TFI is co-allocated with the expected one or not.

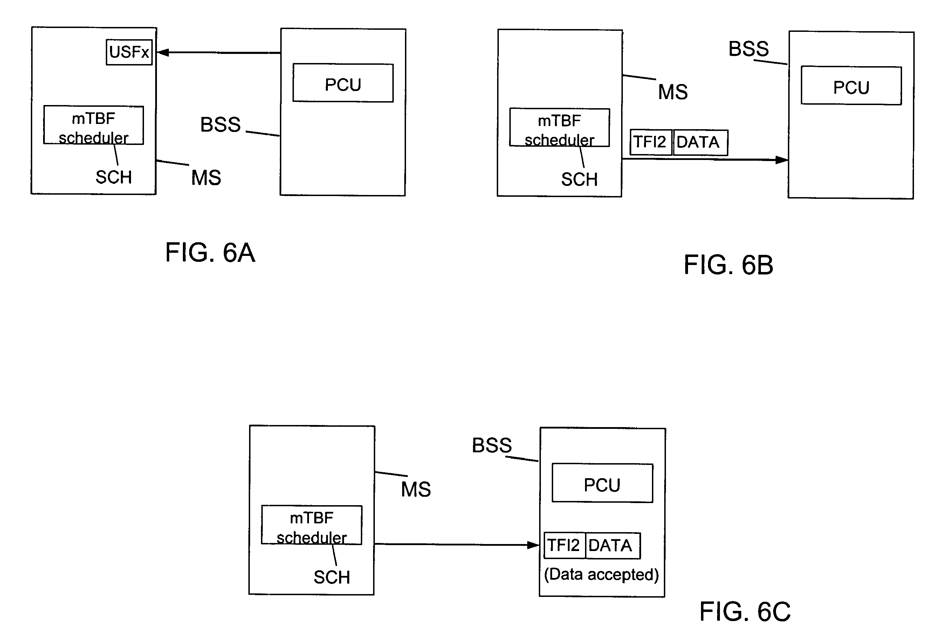

Figures 6A to 6C are pictorial representations of the behaviour of MS and BSS, with reference to the TBFs shown in Fig. 3. For sake of simplicity it will be assumed that USFx0 = USFx1 = USFx and USFy0 = USFy1 = USFy2 = USFy (≠USFx) Those Figures show also the mTBF scheduler SCH within block MS, i.e. the entity choosing the TBF to be transmitted, and the packet control unit PCU within the BSS,

Let us consider, for example, time slot TS1 of Fig. 3. MS receives on TS1 a downlink RLC/MAC radio block containing USFx (Fig. 6A), that is, BSS requests a radio block concerning TBF1. According to the invention, scheduler SCH can choose which TBF will use the "token to speak" (USF). It will be assumed that MS decides to send an Uplink RLC/MAC Radio Block for TBF2 (which also is allocated on TS1), for instance because there is no data to send for TBF1. This is shown in Fig. 6B. The radio block transmitted by MS contains TF12, besides the data. At the BSS side, when the BSS receives the Uplink RLC/MAC Data Block for TBF2, the block is accepted (Fig. 4C), because the TF12 corresponds to a TBF(TBF2) belonging to the same MS and co-allocated with the expected TBF (TBF1) on TS1.

It is evident that the above description has been given by way of non-limiting example and that changes and modifications are possible without departing from the scope of the invention.

## Claims

1. A method of managing multiple, simultaneously active packet flows from a mobile station (MS1...MSn, MS) to a base station (BSS) in a mobile communication system (MN1), wherein each packet flow has assigned thereto a unidirectional logical link between the mobile station and the base station and vice versa, each logical link being allocated on one or more radio channels and a mobile station (MS1...MSn, MS) being allowed to transmit data packets on one of said radio channels towards the base station (BSS) upon reception from the latter of a data request identifying one of the logical links active for that station on said radio channel, **characterised in that** said data request enables the mobile station (MS1...MSn, MS) to transmit data packets relevant to either the logical link identified in the request, or to any of the other active logical links allocated on said radio channel, and the base station (BSS) is enabled to accept data packets from a mobile station (MS1...MSn, MS) provided they belong to a logical link active on the radio channel concerned by the data request.

2. The method as claimed in claim 1, **characterised in that** it comprises the steps of
- checking (11), at a mobile station (MS1...MSn, MS) receiving the data request, whether there is bandwidth unused by the logical link identified in the request; and
- in the negative, sending (12) to the base station (BSS) data of the logical link identified in the request and, in the affirmative, sending (13) to the base station data (BSS) of a logical link different from and using the same radio channel as that concerned by the request.

3. The method as claimed in claim 2, **characterised in that** it comprises the steps of
- checking, at the mobile station (MS1...MSn, MS) receiving the data request, whether the station has data to be transmitted for the logical link identified in the request; and
- in the affirmative, sending a block of such data to the base station, and, in the negative, sending a data block of the different logical link.

4. The method as claimed in claim 1, **characterised in that** it comprises the steps of checking (11'), at the mobile station (MS1...MSn, MS) receiving the request, whether there are logical links other than that identified in the request requiring extra bandwidth and, in the affirmative, transmitting (13') to the base station (BSS) data of a logical link requiring extra bandwidth in place of the data of the logical link identified by the request.

5. The method as claimed in any preceding claim, **characterised in that** said logical links are links used for real time services, with a permanent bandwidth allocation for a whole session duration.

6. The method as claimed in claim 5, **characterised in that** said logical links are uplink temporary block flows of a GPRS system.

7. A mobile station (MS1...MSn, MS) capable of simultaneously running multiple applications entailing transfer of data packets, a respective unidirectional logical link between the mobile station (MS1...MSn, MS) and a base station (BSS) of a mobile communication system and vice versa being assigned to each application run by the mobile station (MS1...MSn, MS) and each link being allocated on one or more radio channels, wherein the mobile station (MS1...MSn, MS) comprises a scheduler (SCH) scheduling uplink transmission of data packets on a radio channel upon reception from the base station (BSS) of a data request identifying one of the logical links active on said radio channel, **characterised in that** said scheduler (SCH) is arranged to schedule transmission of either data packets concerning the logical link identified in the request, or of any of the other active logical links allocated on said radio channel.

8. A mobile station as claimed in claim 7, **characterised in that** said scheduler (SCH) is arranged to schedule transmission of data packets concerning a logical link different from that identified in the request when there is unused bandwidth on the radio channel for the link identified in the request, or there are logical links, different from and co-allocated with that identified in the request, which require extra-bandwidth.

9. A base station (BSS) of a mobile communication system, in which mobile stations (MS1...MSn) can each simultaneously run multiple applications entailing packet transfer, wherein a respective unidirectional logical link between the mobile station (MS1...MSn, MS) and a base station (BSS) of a mobile communication system and vice versa is assigned to each application run by the mobile station (MS1...MSn, MS), and wherein the base station (BSS) comprises a unit controlling packet communications (PCU) and arranged to send towards the mobile stations (MS1...MSn), on a radio channel on which a logical link is allocated, a data request identifying said logical link, to enable a mobile station (MS1....MSn) to the uplink transmission of data packets, **characterised in that** said control unit (PCU) is enabled to accept data packets coming from a mobile station (MS1....MSn) provided such packets belong to the logical link identified in the request or to any of the other active logical links allocated on the same radio channel.
